# EUROPEAN PATENT APPLICATION

(11) **EP 3 786 702 A1**
(43) Date of publication of application: **03.03.2021**
(21) Application number: 19194974.2
(22) Date of filing: 02.09.2019
(51) Int. Cl.: G02F 1/365, G02B 6/02

(54) **MODE CONTROL OF PHOTONIC CRYSTAL FIBER BASED BROADBAND LIGHT SOURCES**

(71) Applicant: ASML Netherlands B.V., 5500 AH Veldhoven (NL)
(72) Inventor: GÖTZ, Peter Maximilian, 5500 AH Veldhoven (NL); BAUERSCHMIDT, Sebastian Thomas, 5500 AH Veldhoven (NL); UEBEL, Patrick Sebastian, 5500 AH Veldhoven (NL)
(74) Representative: ASML Netherlands B.V.

(57) **Abstract**

Disclosed is a mode control system and method for controlling an output mode of a broadband light source comprising a photonic crystal fiber (PCF). The mode control system comprises at least one detection unit configured to measure one or more parameters of radiation emitted from said broadband light source to generate measurement data; and a processing unit configured to evaluate mode purity of said radiation emitted from said broadband light source, from said measurement data. Based on the evaluation, the mode control system is configured to generate a control signal for optimization of one or more pump coupling conditions of said broadband light source. The pump coupling conditions relate to the coupling of a pump laser beam with respect to a fiber core of the photonic crystal fiber.

## Description

### FIELD

The present invention relates to mode control of photonic crystal fiber based broadband radiation generator, and in particular such a broadband radiation generator in relation to metrology applications in the manufacture of integrated circuits.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k₁ lithography may be used to process features with dimensions smaller than the classical resolution limit of a lithographic apparatus. In such process, the resolution formula may be expressed as CD = k₁×λ/NA*,* where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller k₁ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry based tools for inspecting/measuring the exposed and/or etched product in process control. In each case, a radiation source is required. For various reasons, including measurement robustness and accuracy, broadband or white light radiation sources are increasingly used for such metrology applications. It would be desirable to improve on present devices for broadband radiation generation.

### SUMMARY

In a first aspect of the invention there is provided mode control system, being configured for controlling an output mode of a broadband light source comprising a photonic crystal fiber (PCF), the mode control system comprising: at least one detection unit configured to measure one or more parameters of radiation emitted from said broadband light source to generate measurement data; and a processing unit configured to evaluate mode purity of said radiation emitted from said broadband light source, from said measurement data; wherein based on the evaluation, the mode control system is configured to generate a control signal for optimization of one or more pump coupling conditions of said broadband light source; said pump coupling conditions relating to the coupling of a pump laser beam with respect to a fiber core of the photonic crystal fiber.

In a second aspect of the invention there is provided a method of mode control of a broadband light source comprising a photonic crystal fiber, the method comprising: measuring one or more parameters of radiation emitted from said broadband light source to obtain measurement data; evaluating mode purity of said radiation emitted from said broadband light source, from said measurement data; and generating a control signal to optimize of one or more pump coupling conditions of said broadband light source; said pump coupling conditions relating to the coupling of a pump laser beam with respect to a fiber core of the photonic crystal fiber.

Other aspects of the invention comprise a broadband light source and metrology device comprising the mode control system of the first aspect.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device, which may comprise a radiation source according to embodiments of the invention;
- Figure 5 depicts a schematic overview of a level sensor apparatus which may comprise a radiation source according to embodiments of the invention;
- Figure 6 depicts a schematic overview of an alignment sensor apparatus which may comprise a radiation source according to embodiments of the invention;
- Figure 7 schematically depicts the transverse cross-sections of the two HC-PCF designs for white light generation, including (a) Kagome design and (b) single-ring design;
- Figures 8 schematically depicts an exemplary gas filled HC-PCF based broadband light source device;
- Figure 9 is a flowchart describing an operating procedure of a mode control system, in accordance with an embodiment of the invention.
- Figure 10 schematically depicts a broadband light source equipped with a mode control system, in accordance with a first embodiment of the invention, for optimization and stabilization of the fundamental transverse mode LPoi of the light source.
- Figure 11 schematically depicts a broadband light source equipped with a mode control system, in accordance with a second embodiment of the invention, for optimization and stabilization of the fundamental transverse mode LPoi of the light source.
- Figure 12 schematically depicts a broadband light source equipped with a mode control system, in accordance with a third embodiment of the invention, for optimization and stabilization of the fundamental transverse mode LPoi of the light source.
- Figure 13 schematically depicts a broadband light source equipped with a mode control system, in accordance with a fourth embodiment of the invention, for optimization and stabilization of the fundamental transverse mode LPoi of the light source.
- Figure 14 schematically depicts a broadband light source equipped with a mode control system, in accordance with a different embodiment of the invention, for optimization and stabilization of the fundamental transverse mode LP₀₁ of the light source.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

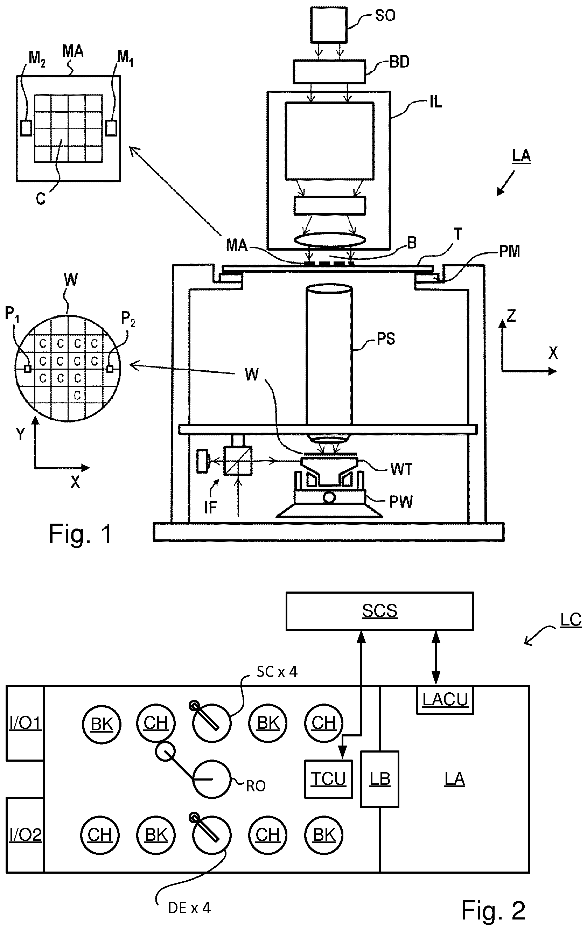

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

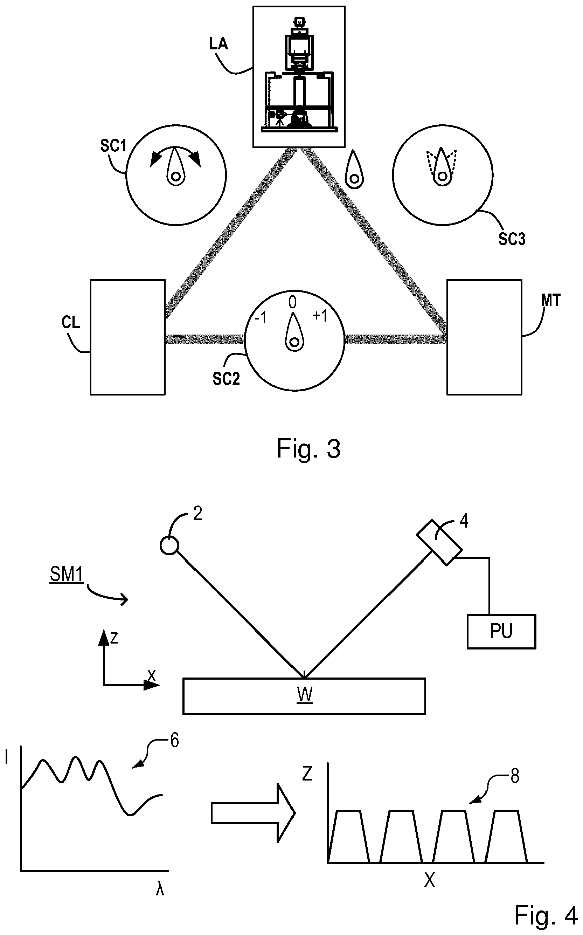

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

A metrology apparatus, such as a scatterometer, is depicted in Figure 4. It comprises a broadband (white light) radiation projector 2 which projects radiation onto a substrate W. The reflected or scattered radiation is passed to a spectrometer detector 4, which measures a spectrum 6 (i.e. a measurement of intensity as a function of wavelength) of the specular reflected radiation. From this data, the structure or profile 8 giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717 A1 incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

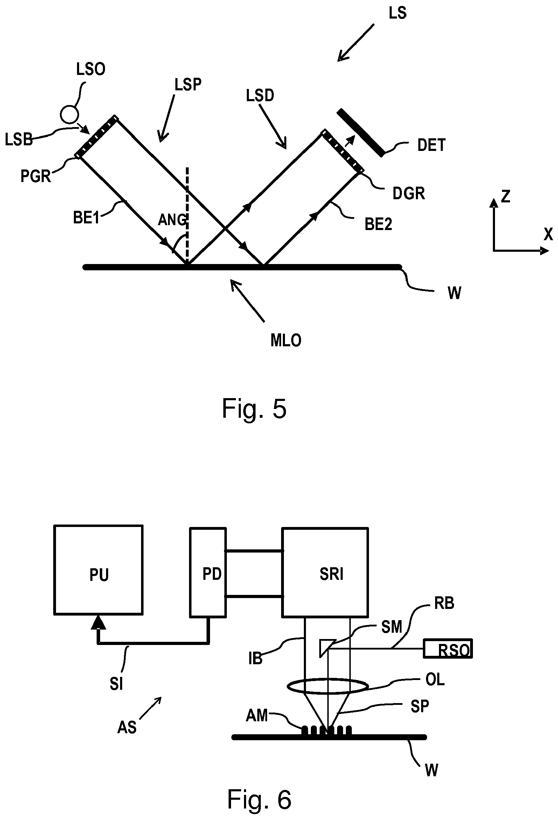

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of reference beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

For optical semiconductor metrology, inspection applications, such as in any of the aforementioned metrology tools, a bright light source which outputs coherent radiation, simultaneously covering a broad wavelength range (e.g., from UV to IR), is often preferred. Such a broadband light source can help improve the flexibility and robustness of applications by allowing wafers with different material characteristics to be optically examined in the same setup/system without a need for any hardware change (e.g., changing a light source so as to have a specific wavelength). Allowing the wavelength to be optimized for a specific application also means that the accuracy of measurements can be further increased.

Gas lasers, which are based on the gas-discharge effect to simultaneously emit multiple wavelengths, can be used in these applications. However, intrinsic issues such as high intensity instability and low spatial incoherence associated with gas lasers can make them unsuitable. Alternatively, outputs from multiple lasers (e.g., solid-state lasers) with different wavelengths can be spatially combined into the optical path of a metrology or inspection system so as to provide a multiple wavelength source. The complexity and high implementation costs, which increases with the number of wavelengths desired, prevents such a solution from being widely used. In contrast, a fiber-based broadband or white light laser, also called a supercontinuum laser, is able to emit radiation with high spatial coherence and broad spectral coverage, e.g., from UV to IR, and therefore is a very attractive and practical option.

A hollow-core photonic crystal fiber (HC-PCF) is a special type of optical fiber that comprises a central hollow core region and an inner cladding structure surrounding the hollow core, both of which extend axially along the entire fiber. The light guidance mechanism is enabled by the inner cladding waveguide structure, which may comprise, for example, thin-walled glass elements. The radiation is thus confined predominantly inside a hollow core and propagates along the fiber in the form of transverse core modes.

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs).

HC-PCFs comprise hollow channels which are filled with a fluid, such that they possess resultant desired characteristics for various light guiding applications; for example, high-power beam delivery using HC-PBFs and gas-based white light generation (or supercontinuum generation) using HC-ARFs. Detail on the design and manufacture of HC-PCFs can be found in US patent US2004175085 (for HC-PBFs) and European patent application EP3136143A1 (for HC-ARFs), which are incorporated herein by reference. HC-PBFs are configured to offer low loss but narrow bandwidth light guidance via a photonic bandgap effect established by the cladding structure surrounding the central hollow core. Whereas, HC-ARFs are engineered to significantly broaden the transmission bandwidth via anti-resonant reflection of light from the cladding.

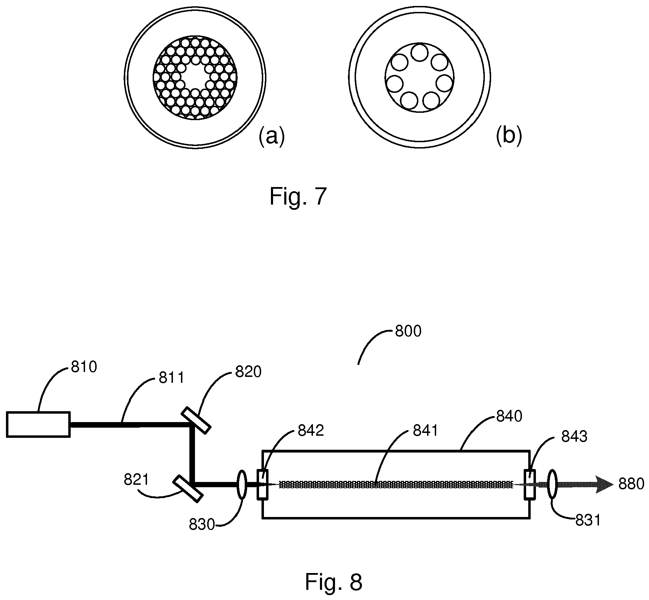

Figure 7 depicts in cross-section, two well-known types of HC-ARFs. Figure 7(a) shows a Kagome fiber, comprising a Kagome lattice structure. Figure 7(b) shows a single-ring or revolver fibers, where the hollow core region is formed and surrounded by a layer of non-touching rings.

For gas-based white light generation, a HC-ARF may be comprised within a gas cell, which is designed to operate, for example, at a pressure up to many 10s of bars (e.g., between 3-100 bar). A gas-filled HC-ARF can act as an optical frequency converter when being pumped by an ultrashort pump laser pulse with sufficient peak power. The frequency conversion from ultrashort pump laser pulses to broadband laser pulses is enabled by a complicated interplay of the dispersion and nonlinear optical processes inside the gas-filled fiber. The converted laser pulses are predominantly confined within the hollow core in the form of transverse core modes and guided to the fiber end. Transverse core modes that are supported by the fiber can be described as linear polarized (LP) modes. In the LP notation, an LP mode is referred to as LPₘₙ, where m and n subscripts are integers representing the azimuthal and radial order of a particular mode. The fundamental mode is LP₀₁ mode. Part of the radiation, for example higher order transverse core modes or specific wavelengths, may leak from the hollow core through the inner cladding waveguide structure and undergoes strong attenuation during its propagation along the fiber. The core region and the cladding region of a HC-ARF can be configured such that the higher order core modes are phase matched to the higher order cladding modes. In this way, the higher order core modes can resonantly couple with the higher order cladding modes which subsequently get attenuated or suppressed. In such a manner, low loss and effectively single transverse mode transmission can be obtained in a broad spectral range.

The spatio-temporal transmission characteristics of a laser pulse, e.g. its spectral amplitude and phase, transmitted along a PCF (such as an HC-PCF) can be varied and tuned through adjustment of pump laser parameters, filling gas parameters, fiber parameters and pump coupling conditions. Said transmission characteristics may include one or more of: output power, output mode profile, output temporal profile, width of the output temporal profile (or output pulse width), output spectral profile, and bandwidth of the output spectral profile (or output spectral bandwidth). Said pump laser parameters may include one or more of: pump wavelength, pump pulse energy, pump pulse width, pump pulse repetition rate. Said fiber parameters may include one or more of: fiber length, size and shape of the hollow core, size and shape of the cladding structure, thickness of the walls surrounding the hollow core. Said filling gas parameters may include one or more of: gas type, gas pressure and gas temperature. Said pump coupling conditions, determining how well a pump laser beam is coupled into a fiber core, may include one or more of: angular offset of the pump laser beam with respect to the fiber core, lateral offset of the pump laser beam with respect to the fiber core and mode matching between the pump laser beam and the fiber core. Said mode matching between the pump laser beam and the fiber core may be determined by parameters such as beam diameter of the pump laser beam, divergence of the pump laser beam, diameter of the hollow core and NA of the hollow core.

The filling gas of a HC-PCF can be a noble gas such as Helium, Neon, Argon, Krypton, and Xenon, a Raman active gas such as Hydrogen, Deuterium, and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulational instability (MI), soliton fission, Kerr effect, Raman effect and dispersive wave generation, details of which are described in WO2018/127266A1 and US9160137B1 (both of which are hereby incorporated by reference). Since the dispersion of the filling gas can be tuned by varying the gas cell pressure, the generated broadband pulse dynamics and the associated spectral broadening characteristics can be adjusted so as to optimize the frequency conversion. The generated broadband laser output can cover wavelengths from UV (e.g., <200 nm) to mid-IR (e.g., >2000 nm).

When applied to semiconductor metrology and alignment applications, such as in any of the aforementioned metrology tools, the transverse mode of the output radiation of a HC-PCF based broadband light source is desired to be the fundamental transverse mode, i.e. LPoi. In other words, a broadband laser beam with a high or maximized mode purity, defined as the ratio between the power in the fundamental transverse mode and the total output power, is typically preferred. This is due to the fact that the fundamental transverse mode has a much lower transmission loss through a PCF (e.g., a HC-PCF) than that of higher order modes (HOMs). Hence, it is more power efficient if all the pump light is coupled into the fundamental transverse mode of the fiber. Furthermore, the presence of HOMs degrades the mode quality and intensity stability of the broadband output. In many applications where a Gaussian beam profile is desired, a broadband output with a poor mode purity will experience a significant power loss as the HOM content of the output will be removed, e.g., by spatial filtering, during transmission. The degradation of the intensity stability results in high measurement noise and poor measurement consistency.

Figure 8 schematically illustrates an exemplary HC-PCF based broadband light source 800. A collimated pump laser beam 811, comprising a train of pump pulses at a specific repetition rate, is output from a pump laser 810 and used as an input laser beam for generation of broadband radiation in the HC-PCF 841. The propagation of the collimated pump laser beam is controlled by one or more beam steering components (e.g., forming part of a beam delivery system), here depicted as two steering mirrors 820 and 821 and is directed to pass through a focusing lens 830. The focusing lens creates a suitable focus of the pump laser beam which is mode matched to the fiber core of the HC-PCF 841. The focused pump laser beam transmits through an input optical window 842 before being coupled into the core of the HC-PCF 841. The HC-PCF 841 having a specific fiber length may employ the Kagome design or the single-ring design with reference to Figure 7. Alternatively, other fiber designs (not shown) such as solid core designs, inhibited coupling designs, hypocycloid-core Kagome, and nested tubular designs may be used. In this example, the entire HC-PCF 841 is comprised in a single pressure-tight gas cell 840 filled with a working gas or a gas mixture at a specific pressure or with a pressure distribution. After being coupled into the gas-filled HC-PCF, pump laser pulses propagate along the fiber where they experience significant spectral broadening. Resultant broadband laser pulses 880 are subsequently discharged from the gas cell 840 via the output optical window 843. The broadband laser beam 880 is then collimated by a collimating lens 831 to a suitable beam size.

To fill the HC-PCF with a working gas, the gas cell may be in communication with a pressurized gas supply or reservoir (not shown). The inner surfaces of the walls and windows of the gas cell enclose a cavity. The axis of the gas cell is parallel to the axis of the HC-PCF.

The pump pulse duration may be chosen to be greater than 10fs, and more specifically within the range of: 10fs to lOOps, 10fs to 30ps or 10fs to 1ps. The pump wavelength may be chosen from the visible regime, near-IR regime or mid-IR regime. The pump laser pulses may have a repetition frequency of several-hundred hertz (Hz), kilohertz (kHz), or megahertz (MHz). In particular the repetition rate may be chosen to be in the range of 100 kHz to 100 MHz, such as 100 kHz, 500 kHz, 1 MHz, 5 MHz, 10 MHz, 20 MHz, 30 MHz, 40 MHz.

The alignment of the pump laser beam with respect to the HC-PCF may comprise two main steps, i.e., coarse alignment and fine alignment. Coarse alignment is performed at a sufficiently low pump pulse energy or pump power to prevent damage to the HC-PCF. This step is to ensure the pump beam is properly coupled into the hollow core of the HC-PCF and the transverse core modes are excited at the front (or input) facet of the HC-PCF. Without coarse alignment, damage might occur when the center of the high power pump laser beam hits the cladding walls of the HC-PCF. Once the transverse core modes are excited and transmission efficiency, defined as the ratio between the fiber output power and the fiber input power, is maximized at the low power level, fine alignment at a high power level is started. Again, the purpose of fine alignment is to further maximize the transmission efficiency. However, in such a conventional optimization method, a maximized transmission efficiency (i.e. a maximized output power at a given input power) does not necessarily correspond to the highest mode purity. In other words, HOM content can still be present in the output of a broadband light source even after the transmission efficiency is optimized. The main reason for this discrepancy is that the transverse beam profile of the pump laser beam is typically imperfect, i.e. M²>1. Hence, no matter how well the overall transmission efficiency is optimized, HOMs will always be excited.

Both coarse alignment and fine alignment (e.g., as part of a pump coupling optimization) can be enabled by one or more of 1) movement of at least one beam steering component in a beam delivery system (represented as two steering mirrors in the Figure 8 and many subsequent Figures, although this is a purely exemplary beam delivery system); 2) movement of the gas cell and 3) movement of the focusing lens (if available). The one or more beam steering components or steering mirrors may be held by kinematic mirror mounts which can be adjusted manually and/or electrically via actuators such as piezoelectric actuators. Mirrors may be fixed by any suitable fixing arrangement, such as for example directly adhering a portion of their back surfaces to the mirror mounts or by using a setscrew. The gas cell may be mounted on a stage module comprising one or more (e.g., piezo) stages. The stage module may provide movement with multiple degrees of freedom, e.g., six degrees of freedom. Additionally or alternatively, the alignment of the pump laser beam with respect to the HC-PCF can also be achieved by inserting one or more extra optical components into the beam path of the pump laser beam (e.g., as part of a beam delivery system or otherwise). Such optical components may comprise, for example, two or more (rotatable) optical wedges or any other optical components that can generate desired movement (angular and/or lateral) of the input pump laser beam. Any one or more of these alignment strategies and methods may be used in a pump coupling optimization of methods described herein.

In order to achieve a good mode matching between the pump laser beam and the fiber core, the pump laser beam may be focused by an optical element (e.g., lens) before entering into the fiber, the lens properties being such that the divergence and the diameter of the focused pump laser beam is well matched with the numerical aperture (NA) and the mode field diameter of the fiber core. Since the characteristics of the focused pump laser beam are determined by the lens when the input pump laser beam is fixed, a different HC-PCF may have different fiber characteristics and therefore may require a different focusing lens for an optimal mode matching. Similarly, when characteristics of the HC-PCF are fixed, a different pump laser beam, e.g., having a different beam diameter or beam divergence, may require a different focusing lens to keep the focused beam diameter the same.

The presence of HOMs degrades the mode quality as well as the intensity stability of the broadband output. The inconsistency in mode purity across the full output spectrum results in wavelength dependent output performance, which will negatively impact the reliability and repeatability of the metrology data should such a broadband light source be used in any of the aforementioned metrology tools. Typically, a HOM is triggered when one or more pump coupling conditions are not optimized. In some situations where the mode purity of a broadband light source is fully optimized across the full output spectral range, HOMs can still appear at the output after a certain amount of runtime. The appearance of HOMs during operation is caused by e.g., thermal and/or vibrational drifts induced degradation of pump coupling conditions.

Referring back to the exemplary setup of a broadband light source in Figure 8, a small amount of the incident pump laser beam can leak through the reflective surface of a beam steering component such as a steering mirror and be incident on the component mounting mechanism. This pump leakage can heat up the mounting mechanism and change its condition. For example, this heating can cause softening of an adhesive used to bond the component to the mounting mechanism, resulting in a small misalignment of the component and hence the pump laser beam with respect to the HC-PCF. Due to the fact that HC-PCF based broadband light sources are alignment sensitive, a misalignment of the pump laser beam with respect to the HC-PCF can significantly degrade the coupling condition of the pump laser beam into the fiber core, resulting in the generation of HOMs and/or the degradation of mode purity of the broadband output. Misalignment and/or a change of alignment of the pump laser beam could also be induced by other factors, such as ambient temperature oscillations or external vibrations. In a similar manner, thermal and/or vibrational drifts of the HC-PCF also result in the appearance of HOMs and/or the degradation of mode purity of the broadband output.

Therefore, there is a strong desire to optimize and/or stabilize the broadband output, in particular the LP₀₁ mode, during operation of a broadband light source. A mode control method and apparatus is therefore proposed for addressing the above-mentioned mode purity issue associated with PCF based broadband light sources.

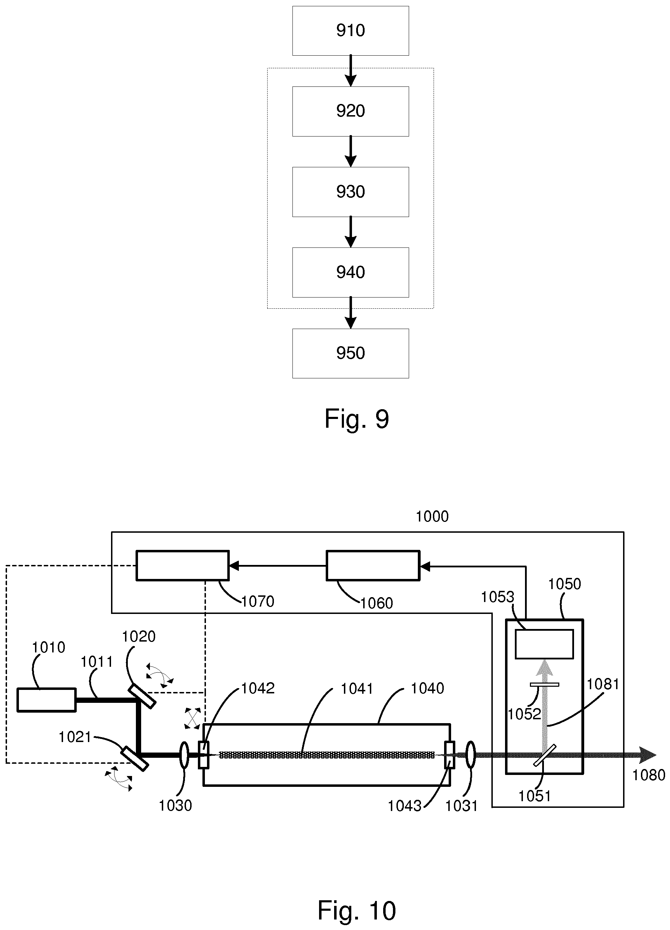

Figure 9 illustrates an operating procedure of the proposed mode control system in accordance with an embodiment. At step 910, one or more parameters of the broadband output beam are measured. Such one or more beam parameters (i.e., parameters of the broadband output beam) are indicative of the output performance in respect of the fundamental mode purity. At step 920, the measured data is processed. At step 930, the processed data is evaluated by following a pre-defined set of criteria. The detail of steps 910 to 930 is largely dependent on the beam parameter(s) being monitored and/or the hardware set-up and more detailed examples of these steps will be described below. According to the outcome of such evaluation, a control signal will be generated at step 940. At step 950, the control signal is used to control one or more components of the broadband light source. The control of such components of the broadband light source optimizes pump coupling conditions such that the mode purity in terms of the fundamental transverse mode LP₀₁ is maximized.

The optimization of pump coupling conditions can be achieved in various ways. Any method which improves the coupling of the pump laser into the PCF can be used, and can be effected by moving the pump beam with respect to the PCF (e.g., via beam steering components or otherwise), moving the PCF with respect to the pump beam or moving both in combination; or alternatively or additionally by changing the position or configuration of any intervening optical components such as a focusing component. This can be performed while monitoring the reference beam (and therefore the output beam) to ensure mode purity is optimized. As such, the method may be implemented in closed-loop operation such that the change of the transverse mode of the broadband output can be continuously monitored and optimized. Depending on the type of beam parameter monitored, different detection mechanisms may be used, each of which may require one or more different measuring devices or components.

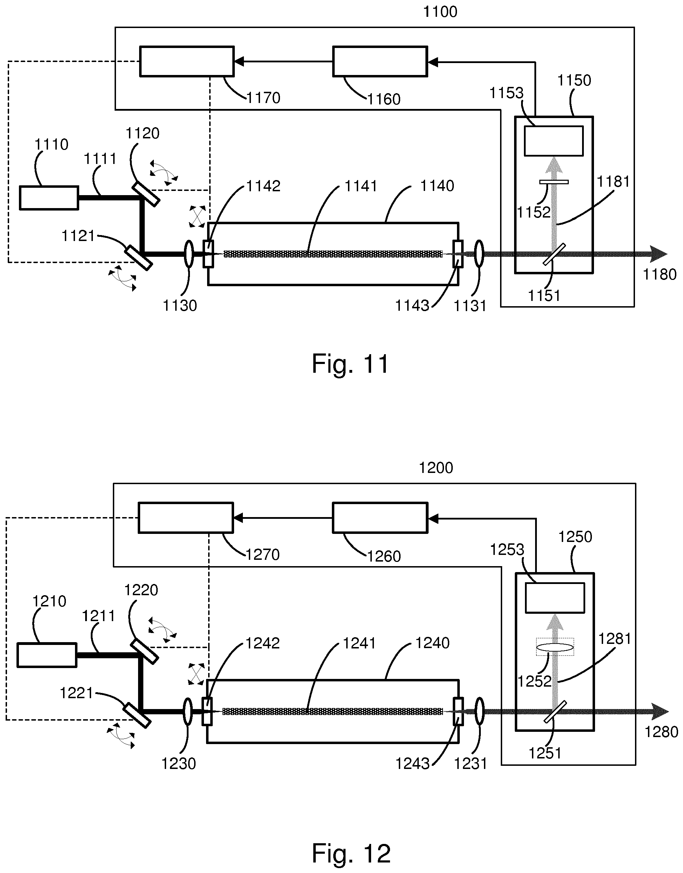

Figure 10 schematically illustrates a broadband light source equipped with a mode control system 1000, in accordance with a first embodiment of the invention, for optimization and stabilization of the fundamental transverse mode LP₀₁ of the light source. In this embodiment, the broadband light source is essentially similar to the exemplary light source 800 illustrated in Figure 8. For brevity, equivalent components and features may be provided with like reference numerals in the remaining Figures instead of being individually described (e.g., labels 811 in Figure 8, 1011 in Figure 10, 1111 in Figure 11 etc. all describe the pump laser beam).

As illustrated in Figure 10, part of the main broadband output beam 1080 is reflected by the front surface of beam splitter 1051 (which optionally may be comprised within the detection unit 1050) and used as a reference beam 1081. It is noted that the beam splitter 1051 should not cause any spatial and spectral distortion to the reference beam, such that reference beam 1081 and the main broadband output beam 1080 are considered to share same beam characteristics. The reference beam 1081 is used by a mode control system 1000 for optimization and stabilization of the fundamental transverse mode LP₀₁ of the broadband light source. The mode control system 1000 comprises a detection unit 1050, a processing unit 1060 and a control unit 1070. The detection unit 1050 measures one or more parameters of the broadband output. The resultant measurement data is then sent to the processing unit 1060 for data processing and evaluation. Based on a result of said evaluation, a control signal is generated and used by the control unit 1070 to control one or more beam control system components accordingly. Such beam control system components may comprise, for example, one or more beam delivery or beam steering components (e.g., the steering mirrors 1020, 1021 or actuators therefor), an actuator or stage which moves the gas cell 1040 and/or an actuator which moves the (optional)focusing lens 1030. The data measurement and evaluation may be performed in a continuous or periodical manner.

In the first embodiment, the detection unit comprises a bandpass filter 1052 and an illumination measuring device such as power measuring device 1053, (e.g., a power meter) arranged such that the power measuring device 1053 measures the power of the broadband output in the spectral range of the passband of the filter. Optionally, the bandpass filter 1052 arrangement may have a variable passband arrangement. In this way, a plurality of power values measured in a plurality of spectral ranges can be obtained, each power value corresponding to each spectral range of each bandpass filter. This may be effected by mounting the bandpass filter 1052 on a filter wheel together with one or more different bandpass filters such that, on completion of a power measurement (which corresponds with step 910 of the method of Figure 9) in a particular spectral range, the filter wheel can be rotated so as to enable a different bandpass filter. Other arrangements of obtaining variable bandpass characteristics may be envisaged, including providing a movable high-pass and movable low-pass continuously variable filter in series for example.

The measured power values from power measuring device 1053 and the spectral information of the bandpass filter(s) used in the measurements are then sent to the processing unit 1060 to calculate one or more spectral parameter values, such as power spectral density (PSD) or energy spectral density values (this corresponds with step 920 of the method of Figure 9). The calculated PSD values are subsequently evaluated (this corresponds with step 930 of the method of Figure 9) in the processing unit 1060 by following a certain set of criteria. The processing unit 1060 may comprise a processor which is configured to process the measured data and subsequently perform evaluation on the processed data. Alternatively or in addition, the evaluation may be performed directly on the measured power values.

During data evaluation, the calculated PSD values may be compared with reference PSD values in corresponding spectral ranges and, based on the comparison, a set of deviation values generated; where a deviation value comprises a measure of the degree of deviation of a calculated PSD value with respect to the reference PSD value. The reference PSD values may correspond to a mode purity of the broadband output beam indicative of an optimal output. The set of deviation values may be evaluated against a set of predefined deviation thresholds for corresponding spectral ranges in order to determine whether the pump coupling conditions of the broadband light source are acceptable. The predefined deviation thresholds may be set to a percentage in the range of, for example, 5% to 25% of the reference PSD values (e.g., 5%, 10%, 15% or 20% of the reference PSD values). If the deviation values are indicative of unacceptable pump coupling conditions such that the mode purity of the broadband output is sub-optimal, a control signal is generated and/or varied accordingly (this corresponds with step 940 of the method of Figure 9). Based on the control signal, the control unit 1070 will command one or more components so as to improve/optimize the pump coupling conditions and maximize mode purity of the broadband output (this corresponds with step 950 of the method of Figure 9).

A couple of specific, and purely exemplary, methods for optimization of pump coupling conditions will now be described, where the control unit 1070 (or processing unit 1060) may command the two beam steering components (e.g., steering mirrors 1020, 1121) to be incrementally scanned in both horizontal and vertical directions. The horizontal direction is defined to be parallel to the optical table plane and the vertical direction is defined to be perpendicular to the table plane. This scanning implementation is applicable to all embodiments described herein, although the beam parameter(s) being monitored may be different for later embodiments (as will be apparent).

In a first such specific scanning implementation, this scanning may be performed by scanning a first of said mirrors (e.g., mirror 1020) in a meandering or zig-zag path: e.g., it may be commanded to scan repetitions of the following sequence: a first incremental scan in a desired range in the x direction and a single movement in the y direction, repeated to cover a desired range in the y direction. While the first mirror 1020 is scanning, the second mirror 1021 is maintained in its original position. After each incremental movement, a measurement is taken, e.g., a power measurement. In such a manner, a power map and/or a calculated PSD map in a predefined area is generated. Based on the map(s), the position of the first mirror is optimized and the second mirror, e.g., 1021, will start scanning in the same manner. At the end of the mirror scanning, the position of the second mirror will also be optimized.

In the above-mentioned scanning routine, the two mirrors are decoupled. When one mirror is scanning, the other one is assumed to be maintained in an optimal position. Such an arrangement is therefore not ideal when both mirrors have drifted from their respective optimal positions. As such, in a second scanning implementation, a co-optimization of two or more beam steering components (e.g., mirrors 1020, 1021) may be performed. This specific implementation may comprise the first mirror, e.g., mirror 1020 making an incremental movement in a predefined range in x direction, followed by the second mirror, e.g., mirror 1021, scanning the full area determined by a desired range in x direction and a desired range in y direction. When the area scan by the second mirror is complete, the first mirror makes another incremental movement in the same direction and the second mirror performs another area scan. This is repeated till the first mirror reaches the end of the desired range in x direction, when it incrementally moves in y direction and performs another incremental scan in the x direction. The full mirror scanning process is complete when the first mirror has scanned the full area determined by the predefined ranges in x and y directions. As such, a power map and/or a calculated PSD map will be generated by the second mirror for each position of the first mirror and, as such, optimal mirror positions determined in this way should be more accurate.

Alternatively, or in addition to controlling (e.g., scanning) one or more beam steering components, further optimization of the output mode purity of a broadband light source can be achieved by controlling (e.g., incrementally scanning) the position of the gas cell 1040. The gas cell movement may be enabled by a stage module and may comprise lateral and/or angular movement in one or more directions. Furthermore, in an embodiment, the focusing lens 1030 may be mounted on a piezo stage or a stage module which allows the lens to move according to one or more degrees of freedom. Such lens movement can further optimize the mode purity of the broadband output 1080.

Figure 11 illustrates a second embodiment. In this embodiment, the detection unit comprises a spatial filter 1152 which may comprise (for example) a pinhole or a single mode fiber, and a power measuring device 1153. Similar to the first embodiment, a reference beam 1181 is directed by the beam splitter 1151 towards the broadband output beam. The spatial filter 1152 is configured to remove the HOM content of the broadband output such that only the fundamental transverse mode is measured and monitored. Since the fundamental transverse mode and HOMs have different divergence angles and mode field diameters, only the fundamental mode of the output beam can be efficiently coupled into the single mode fiber and the HOMs are either not coupled into the single-mode fiber or not guided to the power meter for power measurement. In a similar manner, a pinhole with a carefully chosen size, only allows the fundamental transverse mode to be transmitted and thus effectively removes the HOMs of the output beam.

After being spatially filtered, the power in the fundamental transverse mode LP₀₁ is measured by the power measuring device 1153 placed behind the spatial filter in the detection unit. One or more additional bandpass filters (not shown) or other filter arrangement may be used to select one or more desired spectral ranges for power measurement. When one or more pump coupling conditions are suboptimal, the output power in the fundamental transverse mode begins to drop. As soon as the power in the fundamental mode falls below a predefined power threshold, a control signal is generated and/or varied and sent to the control unit 1170. The control unit 1170 will activate an optimization routine (e.g., as described above) to optimize pump coupling conditions such that the output power in the fundamental transverse mode increases sufficiently (above the threshold) indicative of improved output mode purity.

It should be noted that a power drop may be caused partly by thermal and/or vibrational drifts of the collimating lens 1131 and/or other downstream optical components such as the optical beam splitter 1151 illustrated in Figure 11. Therefore, one or more beam alignment measuring devices (not shown) in the detection unit 1150 so as to either continuously or intermittently monitor the position of the collimated output beam 1180 and the reference beam 1181. When the position of collimated output beam 1180 and/or the reference beam 1181 are confirmed to have drifted, the position of the spatial filter 1152 can be optimized accordingly to compensate for the drift.

According to a third embodiment, as illustrated in Figure 12, the detection unit 1250 comprises a beam shape measuring device 1253 (more generally a beam shape and/or size measuring device) which measures various (e.g., far-field) shape/size parameters of the incident reference beam 1281, such as one or more of diameter/radius, ellipticity, centroid position, etc.. The beam shape measuring device 1253 may be a scanning-slit beam profiler or a CCD camera, for example. One or more additional bandpass filters may be used to select one or more desired spectral ranges for beam profile measurement. Since the fundamental transverse mode of a HC-PCF 1241 has a Gaussian or near Gaussian field distribution and HOMs have non-Gaussian field distributions, beam shape parameters such as ellipticity and beam diameter can be used (separately or in combination) to evaluate the fundamental mode purity. Once measured, the beam shape parameters are sent to the processing unit 1260 for data processing and evaluation. If it is evaluated that the measured beam ellipticity is greater than a predefined ellipticity threshold, the mode purity of the broadband output beam 1280 is confirmed to be sub-optimal. The ellipticity threshold may be set to a value in a range between 1.04 and 1.20, for example. Alternatively, or in addition, the evaluation may comprise comparing the measured beam diameter with a reference value of a collimated Gaussian beam calculated using the relevant parameters of the HC-PCF 1241 and the collimating lens 1231. If the difference between the measured beam diameter and the reference beam diameter is greater than a certain threshold, the mode purity of the broadband output beam 1280 is confirmed to be sub-optimal. In an embodiment, both size and ellipticity are measured and evaluated against respective thresholds as one of these parameters alone is not always completely indicative of mode purity. Alternatively, or in addition, such a method may monitor Laguerre-Gaussian mode shapes of the beam and fit these to Laguerre-Gaussian polynomials indicative of mode purity (or otherwise). Alternatively or in addition, Zernike polynomial shapes can be monitored and fitted in a similar manner. Once sub-optimal mode purity is confirmed, a control signal is generated and/or varied by the processing unit 1260 and sent to the control unit 1270 for pump coupling optimization routine.

In an alternative embodiment, an optical lens 1252 may be comprised within the detection unit to image the end facet of the HC-PCF 1241 onto the beam shape measuring device 1253. In comparison to the third embodiment example described above, where far-field distribution of the output mode is evaluated, this example instead uses near-field distribution of the HC-PCF output for mode evaluation. Similarly, the ellipticity and the diameter of the near field distribution are evaluated against theoretical and/or empirical values. Empirical values derived experimentally might be more reliable in some cases.

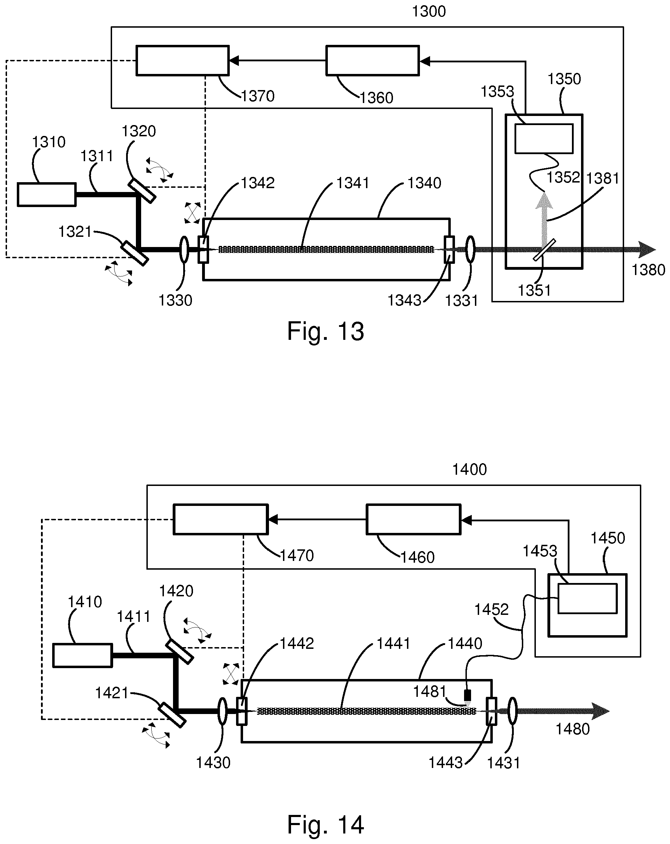

According to a fourth embodiment, as illustrated in Figure 13, the detection unit 1350 comprises a spectrum measuring arrangement; specifically: a multimode fiber 1352, and an optical spectrum measuring device (e.g., optical spectrometer or optical spectrum analyzer) 1353. One end of the multimode fiber 1352 is placed into the beam path and used to receive at least part of the reference beam 1381. The other end of the multimode fiber is optically connected to the optical spectrum measuring device 1353 which is configured to analyze spectral characteristics of the reference beam 1381. The intensity of the reference beam 1381 may be attenuated/controlled by a neutral density (ND) filter (not shown) to avoid damage of the fiber facet and/or saturation of the optical spectrum measuring device. In a different embodiment, the multimode fiber 1352 may not be required. The reference beam may be free-space coupled into the optical spectrum measuring device.

Similar to the first embodiment where measured spectral parameter values (in that case PSD values) are compared with reference values in corresponding spectral ranges, in this embodiment, the spectral parameter values (e.g., measured spectrum) may be compared with a reference spectrum which may be acquired when the mode purity of the broadband output beam is known to be optimal. Depending on the extent of difference between the measured spectrum and the reference spectrum, a control signal will be generated and a pump coupling optimization performed.

In another embodiment, as illustrated in Figure 14, the radiation 1481 leaking through the fiber cladding is collected, e.g., by a multimode fiber 1452. This radiation 1481 may be collected from only a section of HC-PCF 1441, e.g., at or near an end section of HC-PCF 1441 (e.g., at or near the output end), where the outer coating may be stripped. The collected leaking radiation 1481 is then guided to an optical spectrum measuring device 1453 for spectrum measurement. Higher order fiber core modes in an HC-PCF will experience a higher confinement loss than the fundamental LPoi core mode as they propagate along the fiber. Hence, in the case where the mode purity has degraded or is sub-optimal, more power will leak through the cladding structure, giving rise to an increased amplitude of the measured spectrum. Therefore, the amplitude of the measured spectrum can be used to assess whether the mode purity of the broadband output is optimal or not (e.g., by comparison to a threshold). If the mode purity turns out to be sub-optimal, a control signal will be generated by the processing unit and a pump coupling optimization routine will be activated by the control unit.

It should be noted that the configuration of HC-PCF based broadband light sources is not restricted to the specific arrangements illustrated or described, and different configurations may be implemented. For example, the pump laser 1010, 1110, 1210, 1310, 1410 may be configured to output a convergent pump laser beam, instead of a collimated pump laser beam 1011, 1111, 1211, 1311, 1411 the waist of which has a good mode matching with the fiber core. In this case, the focusing lens 1030, 1130, 1230, 1330, 1430 is not required. The beam delivery system may differ from the specific example of two or more steering mirrors 1020, 1120, 1220, 1320, 1420, 1021, 1121, 1221, 1321, 1421 illustrated. Alternatively, or in addition, at least one of these mirrors may comprise a curved surface and/or another focusing beam delivery component provided, which has a radius of curvature (ROC) carefully chosen to form a mode-matched pump spot without the use of the focusing lens 1030, 1130, 1230, 1330, 1430. According to a different embodiment, the input optical window 1042, 1142, 1242, 1342, 1442 may be replaced by the focusing lens 1030, 1130, 1230, 1330, 1430 and/or the output optical window 1043, 1143, 1243, 1343, 1443 may be replaced by the collimating lens 1031, 1131, 1231, 1331, 1431. In such a configuration, the distances between the two lenses and the two fiber ends are be chosen such that mode matching conditions are well maintained. A broadband light source configured in this way is more compact but less flexible. In another embodiment, the gas cell 1040, 1140, 1240, 1340, 1440 may consist of multiple sub-cells; and the HC-PCF 1041, 1141, 1241, 1341, 1441 may be partially or completely comprised in the sub-cells. Beamsplitter 1051, 1151, 1251, 1351, 1451 may be located outside of the respective detection unit 1050, 1150, 1250, 1350, 1450 rather than inside as illustrated. The processing unit 1060, 1160, 1260, 1360, 1460 and control unit 1070, 1170, 1270, 1370, 1470 are not necessarily separate entities and may comprise a single unit with single processor to carry out the processing and control functions.

Although any one of the above-mentioned embodiments is sufficient to independently perform mode optimization for a broadband light source, some embodiments may be complementary to each other and hence may be combined to improve the overall performance of the mode control system. For example, in an embodiment, the beam shape measuring device 1253 used in the third embodiment may be added to or combined with the detection unit 1050 (comprising bandpass filter 1052 and a power measuring device 1053) of the first embodiment. In such a way, the transverse mode profile of the broadband output beam can be directly monitored by the beam measuring device 1253 while the output PSD is measured by the power measuring device 1053. Since the power and/or spectral profile of the broadband light source may gradually degrade over time (e.g., caused by aging of pump diodes), the PSD values may drop correspondingly even though the mode purity remains unchanged. Therefore, the addition of the beam measuring device allows the mode control system to quickly validate whether any decreased PSD values are caused by the mode degradation or from component aging induced power degradation and therefore prevent the mode control system from entering an optimization dead-loop if it is the latter. Furthermore, a regular update of reference PSD values is desirable to reflect component aging induced power degradation. The use of the beam measuring device 1053 ensures that the reference PSD values can be regularly maintained and updated when the mode purity is optimal.

As such, any of two or more of the detection units 1050, 1150, 1250, 1350, 1450 or components therein may be used in combination, either detecting and evaluating the same reference beam or separate reference beams (e.g., as generated by multiple beamsplitters on the output beam).

Further embodiments are disclosed in the subsequent numbered clauses:
1. A mode control system, being configured for controlling an output mode of a broadband light source comprising a photonic crystal fiber (PCF), the mode control system comprising:
   at least one detection unit configured to measure one or more parameters of radiation emitted from said broadband light source to generate measurement data; and
   a processing unit configured to evaluate mode purity of said radiation emitted from said broadband light source, from said measurement data;
   wherein based on the evaluation, the mode control system is configured to generate a control signal for optimization of one or more pump coupling conditions of said broadband light source; said pump coupling conditions relating to the coupling of a pump laser beam with respect to a fiber core of the photonic crystal fiber.
2. A mode control system as defined in clause 1, wherein said one or more parameters of said output radiation comprises one or more parameters indicative of mode purity of said broadband light source.
3. A mode control system as defined in clause 1 or 2, wherein said radiation emitted from said broadband light source detected by the detection unit comprises output radiation emitted from an output end of the photonic crystal fiber.
4. A mode control system as defined in clause 3, comprising a beamsplitter located to split a reference beam from a main output beam emitted by the photonic crystal fiber, said output radiation detected by the detection unit comprising said reference beam.
5. A mode control system as defined in any preceding clause, wherein said at least one detection unit comprises a spectrum measuring arrangement operable to measure one or more spectral parameter values of the output radiation as said measurement data .
6. A mode control system as defined in clause 5, wherein said spectral parameter values comprise one or more parameters of a measured spectrum of the output radiation.
7. A mode control system as defined in clause 5 or 6, wherein said spectrum measuring arrangement comprises a spectrum measuring device and a multimode optical fiber operable to guide said at least part of said radiation emitted from said broadband light source to said spectrum measuring device.
8. A mode control system as defined in any preceding clause, wherein said detection unit comprises one or more bandpass filters; each of said one or more bandpass filters operable to select a respective spectral range of said output radiation and an illumination measuring device operable to detect an illumination parameter indicative of power of said filtered radiation, said measurement data comprising and/or being derived from said illumination parameter indicative of power.
9. A mode control system as defined in clause 5 or 6, wherein said measurement data comprises a power spectral density or energy spectral density value in one or more spectral ranges, derived from said illumination parameter indicative of power.
10. A mode control system as defined in any preceding clause, wherein said detection unit comprises a spatial filter operable to filter out higher order modes other than a fundamental mode from output radiation and an illumination measuring device operable to detect an illumination parameter indicative of power of said filtered radiation, said measurement data comprising and/or being derived from said illumination parameter indicative of power.
11. A mode control system as defined in clause 10, wherein said spatial filter comprises a single mode fiber or a pinhole.
12. A mode control system as defined in any preceding clause, wherein said detection unit comprises a beam shape and/or size measuring device operable to measure one or more beam characteristics of said output radiation related to the shape and/or size of the beam, said measurement data comprising and/or being derived from said beam characteristics of said output radiation related to the shape and/or size of the beam.
13. A mode control system as defined in clause 12, wherein said beam characteristics of said output radiation related to the shape and/or size of the beam comprise one or more of: beam ellipticity, beam diameter, Laguerre-Gaussian mode shape, or Zernike polynomial shape.
14. A mode control system as defined in any preceding clause, wherein configured such that said one or more parameters of radiation emitted from said broadband light source measured by the detection unit comprises leakage radiation emitted from the fiber cladding of said photonic crystal fiber.
15. A mode control system as defined in any preceding clause, comprising one or more actuators to actuate movement of one or more components of the broadband light source; wherein said control signal is operable to control one or more of said actuators.
16. A mode control system as defined in clause 15, further comprising a control unit configured to receive said the control signal from said processing unit and to control said one or more actuators.
17. A mode control system as defined in clause 15 or 16, wherein said one or more actuators are operable to optimization of one or more pump coupling conditions by optimizing one or more of:
   angular offset of the pump laser beam with respect to the fiber core of the photonic crystal fiber;
   lateral offset of the pump laser beam with respect to the fiber core of the photonic crystal fiber;
   beam diameter of the pump laser beam; and
   divergence of the pump laser beam.
18. A mode control system as defined in clause 15, 16 or 17, wherein said one or more actuators comprise one or more of:
   at least one actuator for at least one beam steering component or a support thereof;
   at least one actuator for a gas cell of the photonic crystal fiber or a support thereof;
   at least one actuator for a focusing lens for focusing a pump laser beam onto a fiber core of the photonic crystal fiber.
19. A mode control system as defined in any preceding clause, wherein said processing unit is operable to evaluate measurement data by comparing each of said one or more parameters of radiation emitted from said broadband light source to an equivalent threshold parameter value indicative of optimal or acceptable mode purity.
20. A mode control system as defined in any preceding clause, wherein said photonic crystal fiber comprises a hollow-core photonic crystal fiber (HC-PCF).
21. A mode control system as defined in any preceding clause, wherein said output radiation of said broadband light source comprises a wavelength range of 200nm to 2000nm, or a sub-range within this range.
22. A mode control system as defined in any preceding clause, .wherein mode purity describes a ratio between the power in the fundamental transverse mode and the total output power.
23. A mode control system as defined in any preceding clause, wherein said mode control system being configured to generate a control signal for optimization of one or more pump coupling conditions of said broadband light source comprises:
   being configured to generate a control signal for optimization of the one or more pump coupling conditions, so as to maximize mode purity.
24. A broadband light source device comprising a mode control system as defined in any preceding clause.
25. A metrology device comprising a broadband light source device as defined in clause 24.
26. A metrology device as defined in clause 25, comprising a scatterometer metrology apparatus, a level sensor or an alignment sensor.
27. A method of mode control of a broadband light source comprising a photonic crystal fiber, the method comprising:
   measuring one or more parameters of radiation emitted from said broadband light source to obtain measurement data;
   evaluating mode purity of said radiation emitted from said broadband light source, from said measurement data; and
   generating a control signal to optimize of one or more pump coupling conditions of said broadband light source; said pump coupling conditions relating to the coupling of a pump laser beam with respect to a fiber core of the photonic crystal fiber.
28. A method as defined in clause 27, wherein said one or more parameters of said output radiation comprises one or more parameters indicative of mode purity of said broadband light source.
29. A method as defined in clause 27 or 28, wherein said radiation emitted from said broadband light source detected by the detection unit comprises output radiation emitted from an output end of the photonic crystal fiber.
30. A method as defined in clause 29, comprising splitting a reference beam from a main output beam emitted by the photonic crystal fiber, said measuring one or more parameters from said reference beam.
31. A method as defined in any of clauses 27 to 30, wherein said measuring step comprises measuring one or more spectral parameter values of the output radiation to obtain said measurement data.
32. A method as defined in clause 31, wherein said spectral parameter values comprise a power spectral density value in one or more spectral ranges.
33. A method as defined in clause 31 or 32, comprising bandpass filtering said radiation emitted from said broadband light source and measuring an illumination parameter indicative of the power of said filtered radiation.
34. A method as defined in any of clauses 27 to 33, wherein said comprising spatially filtering out higher order modes other than a fundamental mode from said radiation emitted from said broadband light source and measuring an illumination parameter indicative of the power of said filtered radiation.
35. A method as defined in any of clauses 27 to 34, wherein said measuring step comprises measuring one or more beam characteristics of said output radiation related to the shape and/or size of the beam to obtain said measurement data.
36. A method as defined in clause 35, wherein said beam characteristics of said output radiation related to the shape and/or size of the beam comprise one or more of: beam ellipticity, beam diameter, Laguerre-Gaussian mode shape, or Zernike polynomial shape.
37. A method as defined in any of clauses 27 to 36, wherein said measuring step comprises measuring leakage radiation emitted from the fiber cladding of said photonic crystal fiber to obtain said measurement data.
38. A method as defined in any of clauses 27 to 37, comprising actuating movement of one or more components of the broadband light source based on the control signal so as to optimize of one or more pump coupling conditions of said broadband light source.
39. A method as defined in clause 38, wherein said one or more actuators are operable to optimization of one or more pump coupling conditions by optimizing one or more of:
   angular offset of the pump laser beam with respect to the fiber core of the photonic crystal fiber;
   lateral offset of the pump laser beam with respect to the fiber core of the photonic crystal fiber;
   beam diameter of the pump laser beam; and
   divergence of the pump laser beam.
40. A method as defined in clause 38 or39, wherein said one or more actuators comprise one or more of:
   at least one actuator for at least one beam steering component or a support thereof;
   at least one actuator for a gas cell of the photonic crystal fiber or a support thereof;
   at least one actuator for a focusing lens for focusing a pump laser beam onto a fiber core of the photonic crystal fiber.
41. A method as defined in any of clauses 27 to 40, wherein said evaluation step comprises comparing each of said one or more parameters of radiation emitted from said broadband light source to an equivalent threshold parameter value indicative of optimal or acceptable mode purity.
42. A method as defined in any of clauses 27 to 41, wherein said photonic crystal fiber comprises a hollow-core photonic crystal fiber (HC-PCF).
43. A method as defined in any of clauses 27 to 42, .wherein mode purity describes a ratio between the power in the fundamental transverse mode and the total output power.
44. A method as defined in any of clauses 27 to 43, wherein said generating a control signal for optimization of one or more pump coupling conditions, optimizes the one or more pump coupling conditions to maximize mode purity.

Although all the above-mentioned examples and embodiments of the invention are in connection with HC-PCF based broadband light sources, this invention is equally suitable for mode control of SC-PCF based broadband light source. In a different embodiment, the detection unit of a mode control system measures one or more parameters of the broadband output beam of a SC-PCF based broadband light source. Such parameters should be capable of indicating performance of output mode of the SC-PCF based broadband light source. The measured data are processed in a processing unit and the processed data are subsequently evaluated. Depending on the outcome of the evaluation, a feedback signal (or a control signal) is generated and sent to the control unit of the mode control system. Finally, the control unit receives the control signal and controls active components of the SC-PCF based broadband light source such that the pump coupling conditions of the light source are improved and the output mode purity of the SC-PCF based light source is optimized.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A mode control system, being configured for controlling an output mode of a broadband light source comprising a photonic crystal fiber (PCF), the mode control system comprising:
at least one detection unit configured to measure one or more parameters of radiation emitted from said broadband light source to generate measurement data; and
a processing unit configured to evaluate mode purity of said radiation emitted from said broadband light source, from said measurement data;
wherein based on the evaluation, the mode control system is configured to generate a control signal for optimization of one or more pump coupling conditions of said broadband light source; said pump coupling conditions relating to the coupling of a pump laser beam with respect to a fiber core of the photonic crystal fiber.

2. A mode control system as claimed in claim 1, wherein said one or more parameters of said output radiation comprises one or more parameters indicative of mode purity of said broadband light source.

3. A mode control system as claimed in claim 1 or 2, wherein said radiation emitted from said broadband light source detected by the detection unit comprises output radiation emitted from an output end of the photonic crystal fiber.

4. A mode control system as claimed in claim 3, comprising a beamsplitter located to split a reference beam from a main output beam emitted by the photonic crystal fiber, said output radiation detected by the detection unit comprising said reference beam.

5. A mode control system as claimed in any preceding claim, wherein said at least one detection unit comprises a spectrum measuring arrangement operable to measure one or more spectral parameter values of the output radiation as said measurement data , and
wherein, optionally, . said spectral parameter values comprise one or more parameters of a measured spectrum of the output radiation.

6. A mode control system as claimed in any preceding claim, wherein said detection unit comprises one or more bandpass filters; each of said one or more bandpass filters operable to select a respective spectral range of said output radiation and an illumination measuring device operable to detect an illumination parameter indicative of power of said filtered radiation, said measurement data comprising and/or being derived from said illumination parameter indicative of power.

7. A mode control system as claimed in claim 5, wherein said measurement data comprises a power spectral density or energy spectral density value in one or more spectral ranges, derived from said illumination parameter indicative of power.

8. A mode control system as claimed in any preceding claim, wherein said detection unit comprises a spatial filter operable to filter out higher order modes other than a fundamental mode from output radiation and an illumination measuring device operable to detect an illumination parameter indicative of power of said filtered radiation, said measurement data comprising and/or being derived from said illumination parameter indicative of power.

9. A mode control system as claimed in any preceding claim, wherein said detection unit comprises a beam shape and/or size measuring device operable to measure one or more beam characteristics of said output radiation related to the shape and/or size of the beam, said measurement data comprising and/or being derived from said beam characteristics of said output radiation related to the shape and/or size of the beam, and
wherein, optionally, . said beam characteristics of said output radiation related to the shape and/or size of the beam comprise one or more of: beam ellipticity, beam diameter, Laguerre-Gaussian mode shape, or Zernike polynomial shape.

10. A mode control system as claimed in any preceding claim, wherein configured such that said one or more parameters of radiation emitted from said broadband light source measured by the detection unit comprises leakage radiation emitted from the fiber cladding of said photonic crystal fiber.

11. A mode control system as claimed in any preceding claim, comprising one or more actuators to actuate movement of one or more components of the broadband light source; wherein said control signal is operable to control one or more of said actuators, and
wherein, optionally, said one or more actuators are operable to optimization of one or more pump coupling conditions by optimizing one or more of:
angular offset of the pump laser beam with respect to the fiber core of the photonic crystal fiber;
lateral offset of the pump laser beam with respect to the fiber core of the photonic crystal fiber;
beam diameter of the pump laser beam; and
divergence of the pump laser beam.

12. A mode control system as claimed in any preceding claim, .wherein mode purity describes a ratio between the power in the fundamental transverse mode and the total output power.

13. A broadband light source device comprising a mode control system as claimed in any preceding claim.

14. A metrology device comprising a broadband light source device as claimed in claim 13.

15. A method of mode control of a broadband light source comprising a photonic crystal fiber, the method comprising:
measuring one or more parameters of radiation emitted from said broadband light source to obtain measurement data;
evaluating mode purity of said radiation emitted from said broadband light source, from said measurement data; and
generating a control signal to optimize of one or more pump coupling conditions of said broadband light source; said pump coupling conditions relating to the coupling of a pump laser beam with respect to a fiber core of the photonic crystal fiber.
